(19) Europäisches Patentamt
European Patent Office
Office européen des brevets

(11) **EP 4 035 845 A1**

(12) **EUROPÄISCHE PATENTANMELDUNG**

(43) Veröffentlichungstag:
**03.08.2022 Patentblatt 2022/31**

(21) Anmeldenummer: **21154060.4**

(22) Anmeldetag: **28.01.2021**

(51) Internationale Patentklassifikation (IPC):
***B25J 9/16*** *(2006.01)* ***B65G 47/91*** *(2006.01)*

(52) Gemeinsame Patentklassifikation (CPC):
**B25J 9/1674; B25J 9/1694; B65G 47/917;**
B65G 2203/042

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft
80333 München (DE)**

(72) Erfinder: **GWINNER, Marc
70734 Fellbach (DE)**

(74) Vertreter: **Siemens Patent Attorneys
Postfach 22 16 34
80506 München (DE)**

(54) **HANDHABEN VON STÜCKGÜTERN MITTELS EINER SAUGGREIFVORRICHTUNG**

(57) Zum automatisierten Bewegen eines Stückguts (8) mittels einer Sauggreifvorrichtung (10):
- Andocken eines Saugkopfs (12) der Sauggreifvorrichtung (10) an das Stückgut (8) und Greifen des Stückguts (8) mittels eines in dem Saugkopf (12) erzeugten Unterdrucks;
- Automatisches Bewegen des durch die Sauggreifvorrichtung (10) ergriffenen Stückgutes (8) durch automatisches Bewegen des Saugkopfes (12);
- Erzeugen eines Ausgangssignals mittels eines Lastsensors (14), wobei das Ausgangssignal eine Information umfasst, die im Folgenden Greifinformation genannt wird, und die eine Aussage darüber zulässt, wie sicher das Stückgut (8) durch die Sauggreifvorrichtung (10) gehalten wird;
- Einstellen mindestens eines Betriebsparameters der Sauggreifvorrichtung (10) in Abhängigkeit von der Greifinformation.

FIG 1

EP 4 035 845 A1

**Beschreibung**

Die Erfindung bezieht sich auf das technische Gebiet des automatischen Ergreifens und Bewegens von Stückgut mittels einer Sauggreifvorrichtung.

Sauggreifer, auch Vakuumgreifer genannt, sind Vorrichtungen, die mittels eines in einem Saugkopf erzeugten Unterdrucks ein Stückgut ergreifen und manipulieren. Als Saugkopf dient beispielsweise ein Saugnapf oder ein Saugstutzen. Um den Unterdruck zu erzeugen kann beispielsweise eine Vakuumpumpe verwendet werden.

Werden Stückgüter, in der Fachsprache der Logistik auch Objekte oder Sendungen genannt, beispielsweise Pakete oder verschlossene Plastiktüten, mit einem Vakuumgreifer bewegt, so limitiert die Haltekraft des Vakuumgreifers und die zu bewegende Masse die mögliche Dynamik. Um ein Abreissen der Sendungen zu verhindern, sollte die folgende Bedingung erfüllt sein:

$$F_{\text{Trägheit,Greifobjekt}} < F_{\text{Haltekraft}} \,,$$

wobei die Kraft $F_{\text{Trägheit,Greifobjekt}}$ die resultierende Kraft von Gravitationskraft und von der Beschleunigung herrührende Trägheitskraft ist.

Wobei $F_{\text{Trägheit,Greifobjekt}}$ die durch die Beschleunigung auf das Stückgut wirkende Trägheitskraft ist und $F_{\text{Haltekraft}}$ diejenige Kraft ist, mit welcher der Sauggreifer das Stückgut festhält.

Vereinfacht dargestellt gilt daher während eines Z-Hubs, also eines Hubs senkrecht nach oben:

$$m_{\text{Greifobjekt}} * (a_z + g) < A_{\text{Saugnapf}} * \Delta p_u$$

wobei $m_{\text{Greifobjekt}}$ die Masse des Stückguts, $a_z$ die Beschleunigung des Stückguts in vertikaler Richtung nach oben, $g$ die Erdbeschleunigung, $A_{\text{Saugnapf}}$ die Auflagefläche des Saugnapfs und $\Delta p_u$ die Differenz des atmosphärischen Drucks in welchem sich der Sauggreifer befindet zu dem Druck in dem Sauggreifer ist.

Objekte mit einer grossen Masse müssen daher viel langsamer bewegt werden als Objekte, die sehr leicht sind, damit sie nicht vom Sauggreifer abreissen. Um die Dynamik auf das zu bewegende Objekt anzupassen ist es notwendig die Masse des Objektes zu kennen. Zudem schwankt die Greifkraft abhängig vom durch den Vakuumsauger erzeugten Unterdruck im Saugkopf aufgrund von inneren und äusseren Einflüssen.

Die Verwendung eines Sauggreifers gestaltet sich daher oft ineffizient, wenn er unterschiedliche Objekte, beispielsweise postalische Sendungen mit unterschiedlichem und unbekanntem Gewicht verarbeiten soll.

Liegen keine Informationen über die Eigenschaften der einzelnen zu greifenden Objekte vor, beispielsweise deren Masse und/oder ob es sich um eine Kartonbox oder einen Plastiktüte handelt, so muss die Dynamik auf die zum Sauggreifen ungünstigste Objektart angepasst werden, beispielsweise auf die grösstmögliche Masse. Dies führt zu einem sehr geringen Durchsatz bei Pick and Place Vorgängen.

Versuche im Labor haben zudem gezeigt, dass biegeschlaffe Sendungen, beispielsweise verschlossene Tüten sehr viel Falschluft ziehen, also eine sehr grosse Leckage haben, und es aufgrund der reduzierten Druckdifferenz zu einer Halbierung der Haltekraft kommen kann. Dies bedingt zusätzlich eine entsprechende Einschränkung der Dynamik.

Denkbar ist auch, dass die Objekte vor dem Greifen gewogen werden. Dies ist jedoch sehr umständlich und bedingt das Vorhandensein einer Waage und zusätzliche Verfahrensschritte.

Auch kann durch ein Vision-System, beispielsweise ein KameraSystem, das die Grösse eines Objektes ermittelt und ausgehend von einem grossen Objektvolumen eine grosse Objektmasse vermutet werden. Dies ist jedoch ungenau und bei kleinen, aber schweren Objekten ist mit einem Abriss des Objektes vom Sauggreifer zu rechnen.

Der vorliegenden Erfindung liegt daher die Aufgabe zugrunde, den Durchsatz einer Sauggreifvorrichtung zu erhöhen.

Diese Aufgabe wird durch die in den unabhängigen Ansprüchen vorgestellten Lösungen gelöst. Vorteilhafte Ausgestaltungen der Erfindung sind in weiteren Ansprüchen angegeben.

Gemäss einem Aspekt wird ein Verfahren zum automatisierten Bewegen eines Stückguts mittels einer Sauggreifvorrichtung vorgestellt. Dabei wird ein Saugkopf der Sauggreifvorrichtung an das Stückgut angedockt und das Stückgut wird mittels eines in dem Saugkopf erzeugten Unterdrucks ergriffen. Das ergriffene Stückgut wird dann automatisch bewegt, indem der Saugkopf automatisch bewegt wird. Ein Lastsensor erzeugt ein Ausgangssignal, das eine Information umfasst, die eine Aussage darüber zulässt, wie sicher das Stückgut durch die Sauggreifvorrichtung gehalten wird. Diese Information wird im Folgenden Greifinformation genannt. Mindestens ein Betriebsparameter der Sauggreifvorrichtung wird in Abhängigkeit von der Greifinformation eingestellt.

Gemäss einem Aspekt wird eine Sauggreifvorrichtung zum automatisierten Bewegen eines Stückguts vorgestellt. Die Sauggreifvorrichtung umfasst einen Saugkopf, ein Saugmittel, einen Lastsensor, ein Bewegungsmittel und ein Kontrollmittel. Das Saugmittel, beispielsweise eine Vakuumpumpe, ist ausgestaltet, einen Unterdruck in dem Saugnapf zu erzeugen. Der Saugkopf ist ausgestaltet, an ein Stückgut angedockt zu werden und dieses mittels eines in dem Saugkopf erzeugten Unterdrucks zu greifen. Das Bewegungsmittel ist ausgestaltet, den Saugkopf und das durch den Saugkopf ergriffene Stückgut automatisch zu bewegen. Der Lastsensor ist ausgestaltet, ein Ausgangssignal zu erzeugen, das eine Greifinformation umfasst. Die Greifinformation lässt eine Aussage darüber zu, wie sicher das Stückgut von dem Saugkopf gehalten wird. Der Lastsensor ist ausgestaltet, dieses Ausgangssignal in das Kontrollmittel einzuspeisen. Das Kontrollmittel ist ausgestaltet, die Sauggreifvorrichtung so anzusteuern, dass mindestens ein Betriebsparameter der Sauggreifvorrichtung in Abhängigkeit von der Greifinformation eingestellt wird.

Das Einstellen eines Betriebsparameters kann auf vielfältige Weise vorgenommen werden, beispielsweise kann der Betriebsparameter erhöht, reduziert, weniger erhöht als Vorgesehen, weniger reduziert als vorgesehen, limitiert, auf einen vorgegeben Wert gesetzt, geregelt, gesteuert oder belassen werden.

Gemäss einem Ausführungsbeispiel wird das Einstellen des mindestens einen Betriebsparameters im Rahmen eines Regelungsprozesses vorgenommen. Auf diese Weise kann der Betriebsparameter während einer Dauer des Bewegens des Stückgutes durch die Sauggreifvorrichtung kontrolliert und aufgrund der durch den Lastsensor gewonnen Greifinformation angepasst werden. Hierfür kann das Kontrollmittel einen Regelkreis umfassen.

Gemäss einem Ausführungsbeispiel kann das Einstellen des mindestens einen Betriebsparameters aber auch im Rahmen eines reinen Steuerungsprozesses vorgenommen werden, beispielsweise indem anhand der Halteinformation ein vorgegebenes Bewegungsprofil durch die Sauggreifvorrichtung abgefahren wird. Hierfür kann das Kontrollmittel einen Steuerungsmittel umfassen.

Gemäss einem Ausführungsbeispiel umfasst der mindestens eine Betriebsparameter eine Beschleunigung des Saugkopfs. Hierfür kann das Kontrollmittel ausgestaltet sein, das Bewegungsmittel so anzusteuern, dass die Beschleunigung des Saugkopfs in Abhängigkeit von der Greifinformation eingestellt wird. Dies erlaubt beispielsweise eine durch die Bewegung des Saugkopfs auf das Stückgut wirkende Trägheitskraft zu limitieren, indem die Beschleunigung des Saugkopfes limitiert wird. Gemäss einem Ausführungsbeispiel wird als Betriebsparameter eine vertikale Komponente einer Beschleunigung des Saugkopfes abhängig von der Greifinformation eingestellt oder limitiert. So kann insbesondere ein Abriss von dem Stückgut in vertikaler Richtung vermieden werden, da in vertikaler Richtung in erhöhtem Masse mit einem Abriss des Stückguts zu rechnen ist, da in dieser Richtung zusätzlich die Gravitationskraft wirkt. und das Kontrollmittel ausgestaltet ist, das Bewegungsmittel so anzusteuern, dass die Beschleunigung des Saugkopfs in Abhängigkeit von der Greifinformation eingestellt wird.

Das Limitieren der Beschleunigung kann beispielsweise ein Reduzieren, Begrenzen, oder langsamer als vorgesehenes Erhöhen der Beschleunigung umfassen.

Gemäss einem Ausführungsbeispiel umfasst der Saugkopf eine Struktur, die ausgestaltet ist, an das Stückgut anzudocken und dieses mittels eines Unterdrucks zu greifen, beispielsweise einen Saugnapf oder einen Saugstutzen. Der Unterdruck ist in Vergleich zur atmosphärischen Umgebung in welcher sich die Sauggreifvorrichtung befindet.

Gemäss einem Ausführungsbeispiel umfasst der mindestens eine Betriebsparameter eine Pumpleistung einer Vakuumpumpvorrichtung, welche den Unterdruck generiert. Hierfür kann das Kontrollmittel ausgestaltet sein, das als Vakuumpumpvorrichtung ausgestaltete Saugmittel so anzusteuern, dass die Saugleistung des Saugmittels in Abhängigkeit von der Greifinformation eingestellt wird. Beispielsweise kann so die Vakuumpumpvorrichtung im Normalbetrieb auf einer mittleren Leistung betrieben werden. Liefert der Lastsensor für ein ergriffenes Stückgut jedoch eine Greifinformation, die darauf hinweist, dass das Stückgut nicht ausreichend gut gehalten wird, beispielsweise indem die Greifinformation einen vorgegebenen Schwellwert unter- oder überschreitet, wird die Pumpleistung erhöht. So kann sichergestellt werden, dass das Stückgut sicher gehalten wird. Ebenso kann aufgrund der Erhöhung der Pumpleistung der Saugkopf stärker beschleunigt werden, um das Stückgut mittels der Sauggreifvorrichtung zu bewegen, ohne dass ein Abfallen des Stückguts von dem Saugkopf droht.

Gemäss einem Ausführungsbeispiel ist die Greifinformation abhängig von einer durch die Bewegung des Stückguts erwirkten Trägheitskraft. Dadurch können auf die Masse des Stückguts zurückzuführende Effekte bei der Einstellung der Betriebsparameter berücksichtigt werden, beispielsweise die Gravitation oder die Trägheit des Stückguts. Auf diese Weise kann verhindert werden, dass aufgrund einer zu hohen Beschleunigung das Stückgut von dem Saugkopf abfällt.

Gemäss einem Ausführungsbeispiel ist die Greifinformation abhängig von dem in der Sauggreifvorrichtung herrschenden Unterdruck. Auf diese Weise können druckabhängige Umstände, wie beispielsweise eine erhöhte Leckage, beispielsweise aufgrund einer Form, Grösse, Gewicht, durch die Vakuumpumpe bedingte Druckschwankungen und/oder Art des Stückguts auf einfache Weise berücksichtigt werden, um die auf das ergriffene Stückgut wirkende Beschleunigung zu optimieren.

Gemäss einem Ausführungsbeispiel wird eine Art des Stückguts ermittelt, beispielsweise ob es sich bei dem Stückgut um ein Paket oder um eine Tüte handelt, und der mindestens eine Betriebsparameter wird abhängig von der ermittelten Art des Stückgutes eingestellt.

Gemäss einem Ausführungsbeispiel umfasst die Sauggreifvorrichtung ein Visionsystem, beispielsweise ein Kamerasystem, das ausgestaltet ist, eine Eigenschaft des Stückguts zu ermitteln und in das Kontrollmittel einzuspeisen.

Diese Information wird im Folgenden Stückguteigenschaftsinformation genannt. Beispielsweise kann das Visionsystem als Stückguteigenschaftsinformation eine Grösse, oder ob es sich bei dem Stückgut um ein Paket oder um eine Tüte handelt, ermitteln. Das Kontrollmittel ist ausgestaltet, die Sauggreifvorrichtung so anzusteuern, dass mindestens ein Betriebsparameter der Sauggreifvorrichtung in Abhängigkeit von der Stückguteigenschaftsinformation eingestellt wird.

Gemäss einem Ausführungsbeispiel wird eine Art des Stückguts ermittelt, beispielsweise ob es sich bei dem Stückgut um ein Paket oder um eine Tüte handelt, und das automatische Bewegen des durch den Sauggreifer ergriffenen Stückgutes umfasst, dass eine Beschleunigung des Stückgutes abhängig von der ermittelten Art des Stückgutes eingestellt oder angepasst wird. Auf diese Weise lässt sich die Beschleunigung an die Art des Stückguts anpassen, beispielsweise können für Tüten höhere Sicherheitsmargen angewendet werden, die Beschleunigung bereits früher limitiert werden, als dies bei Paketen sinnvoll wäre. Auf diese Weise kann der Durchsatz des Sauggreifers weiter erhöht werden.

Gemäss einem Ausführungsbeispiel ist der Lastsensor als Lastschalter ausgestaltet, der einen Schwellwert definiert, wobei beim Überschreiten oder Unterschreiten des Schwellwerts der mindestens eine Betriebsparameter eingestellt wird. Beispielsweise lässt sich so auf einfache Weise eine Regelung implementieren, die bei Unterschreiten eines Schwellwertes für die Qualität des Haltens des Stückguts die Beschleunigung des Saugkopfs limitiert, um einerseits ein durch die Trägheit bedingtes Abfallen des ergriffenen Stückguts von dem Saugkopf zu verhindern, andererseits aber die Beschleunigung trotzdem nicht unnötig tief zu halten, damit die Sauggreifvorrichtung mit einem möglichst hohen Durchsatz betrieben werden kann.

Gemäss einem Ausführungsbeispiel ist der Lastsensor ausgestaltet, ein Ausgangssignal auszugeben, das mehr als eine reine Schwellwertentscheidung zulässt, und der mindestens eine Betriebsparameter abhängig von einem analogen oder quasianalogen Wert des Ausgangssignals eingestellt wird. Auf diese Weise kann eine Regelung implementiert werden, die welche den Betriebsparameter differenzierter an die jeweilige Griffinformation anpasst.

Gemäss einem Ausführungsbeispiel ist der Lastsensor in dem Saugkopf angeordnet.

Gemäss Ausführungsbeispielen ist das Ausgangssignal ein analoges Ausgangssignal. Gemäss weiteren Ausführungsbeispielen ist das Ausgangssignal ein digitales Ausgangssignal.

Im Folgenden wird die Erfindung anhand der in den Figuren dargestellten Ausführungsbeispiele näher beschrieben und erläutert. Darin zeigen schematisch:

Figuren 1 bis 4 Seitenansichten einer Sauggreifvorrichtung gemäss einem Ausführungsbeispiel der Erfindung zu unterschiedlichen Zeitpunkten zur Illustration eines Ausführungsbeispiels des Verfahrens zum Automatisierten Bewegens des Stückguts;

Figur 5 zeigt eine schematische Seitenansicht einer beispielhaften Sauggreifvorrichtung 10 vergleichbar mit derjenigen von Figur 1-4;

Figur 6 zeigt beispielhaft eine graphische Darstellung von Kennlinien;

Figur 7 zeigt ein beispielhaftes Ablaufdiagramm zur Illustration von weiteren Ausführungsbeispielen der Erfindung; und

Figur 8 zeigt eine schematische Seitenansicht eines Saugkopfs gemäss einem Ausführungsbeispiel.

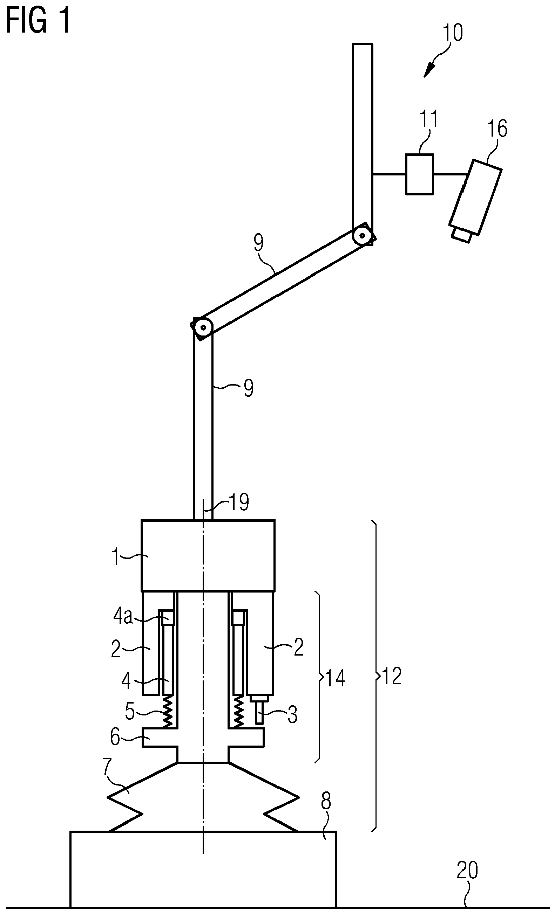

Figur 1 zeigt eine Seitenansicht Sauggreifvorrichtung 10 gemäss einem Ausführungsbeispiel der Erfindung. Die Sauggreifvorrichtung 10 umfasst einen Saugkopf 12, ein Bewegungsmittel 9, ein Kontrollmittel 11 und ein Visionsystem 16. Die Teile des Saugkopfs sind sofern sinnvoll rotationssymmetrisch um eine longitudinale Achse 19 angeordnet. Der Saugkopf 12 umfasst ein als Vakuumpumpe ausgestaltetes Saugmittel 1 oder eine Ventilanbindung 1a, ein Gehäuse 2, einen Näherungsschalter 3, eine Gleitbuchse 4 mit Dichtung 4a, ein Federsystem 5, eine Kolbenstange 6 mit longitudinaler Vakuumdurchführung und einen Saugnapf 7. Die Kolbenstange 6, auch einfach als Kolben 6 bezeichnet, und der Saugnapf 7 sind so ausgestaltet und angeordnet, dass in deren Innern ein Kanal angeordnet ist, durch welchen ein von dem Saugmittel generierter Unterdruck auf einen Ausgang des Saugnapfs wirkt, dass an diesem Saugnapfausgang ein Stückgut angedockt und mittels des Unterdrucks durch den Saugkopf 12 ergriffen werden kann.

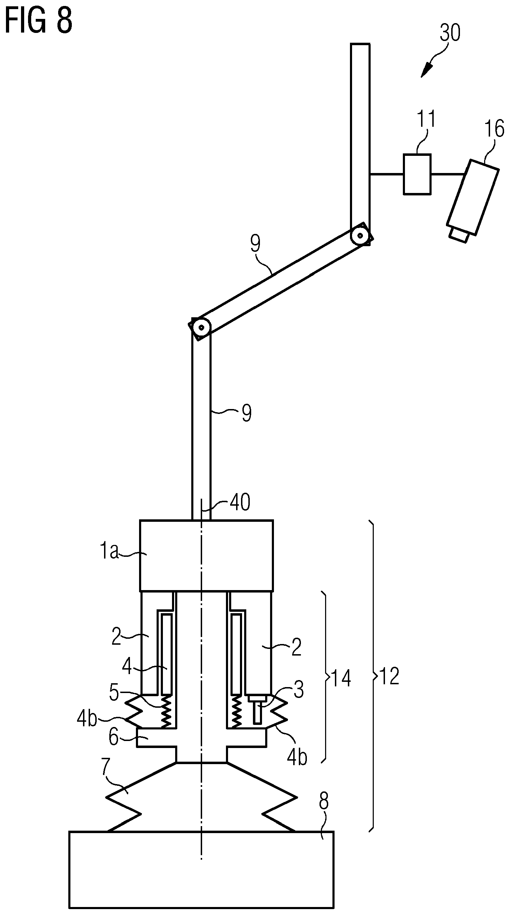

Die Kolbenstange 6 ist ausgestaltet in der Gleitbuchse in longitudinaler Richtung zu gleiten, wobei eine Dichtung, beispielsweise in Form eines Dichtrings 4a oder eines Faltenbalgs 4b (siehe Figur 8), und das Gehäuse 2 einen Teil der Kolbenstange pneumatisch von dem atmosphärischen Umgebungsruck abschirmen. Wird in dem Saugmittel 1 bei abgedichtetem Saugnapfausgang ein Unterdruck relativ zum atmosphärischen Umgebungsruck generiert, so wirkt eine Kolbenkraft in longitudinaler Richtung auf die Kolbenstange 6 in Richtung des Saugmittels. Das Federsystem 5 ist so ausgestaltet und angeordnet, dass es eine auf die Kolbenstange 6 wirkende Federkraft bewirkt, die der Kolbenkraft entgegenwirkt.

Der Näherungsschalter 3 ist so ausgestaltet und angeordnet, dass mit ihm die Bewegung der Kolbenstange 6 detektiert werden kann. Im vorliegenden Beispiel ist der Näherungsschalter 3 an einen Vorsprung der Kolbenstange 6 gekoppelt. Um eine sichere Kopplung zu gewährleisten kann der Näherungsschalter an den Vorsprung befestigt sein, oder mittels eines weiteren Federsystems (nicht dargestellt) an den Vorsprung gedrückt werden.

Das Bewegungsmittel 9 ist ausgestaltet, den Saugkopf 12 und das durch den Saugkopf 12 ergriffene Stückgut 8 automatisch zu bewegen. In dem in Figur 1 dargestellten Ausführungsbeispiel ist das Saugmittel 1 in dem Saugkopf 12 integriert und wird mit diesem mitbewegt. In einer Variante ist das Saugmittel abgesetzt von dem Saugkopf stationär oder nicht mit dem Saugkopf mitfahrend angeordnet und mit dem Saugkopf 12 über eine pneumatische Leitung und eine im Saugkopf angeordnete Ventilanbindung 1a mit dem Gehäuse 2 verbunden.

Die Sauggreifvorrichtung 10 umfasst zudem einen Lastsensor 14, der in dem in Figur 1 dargestellten Ausführungsbeispiel das Gehäuse 2, die Kolbenstange 6, das Federsystem 5, die Gleitbuchse 4 mit der Dichtung 4a, und insbesondere den Näherungsschalter 3 umfasst. Wie oben ausgeführt ist der Näherungsschalter 3 ausgestaltet, mit der Kolbenstange 6 in longitudinaler Richtung mitzufahren. Zudem ist der Näherungsschalter 3 ausgestaltet beim Überfahren einer definierten Position ein Signal an das Kontrollmittel 11 abzugeben.

Die Figuren 1-4 zeigen zu unterschiedlichen Zeitpunkten zur Illustration eines Ausführungsbeispiels des Verfahrens zum Automatisierten Bewegens eines Stückguts und zum besseren Verständnis der Funktionsweise der beispielhaften Sauggreifvorrichtung 10. Das Verfahren wird durch das Kontrollsystem 11 gesteuert. Dazu ist das Kontrollsystem elektronisch, nachrichtentechnisch und/oder funktechnisch mit der Saugmittel 1, dem Lastsensor 14, dem Näherungsschalter 3, dem Bewegungsmittel 9 und/oder dem Visionsystem 16 verbunden.

Figur 1 zeigt die Sauggreifvorrichtung 10 zu einem Zeitpunkt, zu welchem das Bewegungsmittel 9 den Saugkopf 12 zu dem Stückgut 8 bewegt hat, sodass der Saugnapf 7 an das Stückgut 8 andockt. Zusammen mit oder nach dem Andocken wird das Stückgut 8 mittels eines durch die Vakuumpumpe 1 in dem Saugkopf 12 erzeugten Unterdrucks ergriffen.

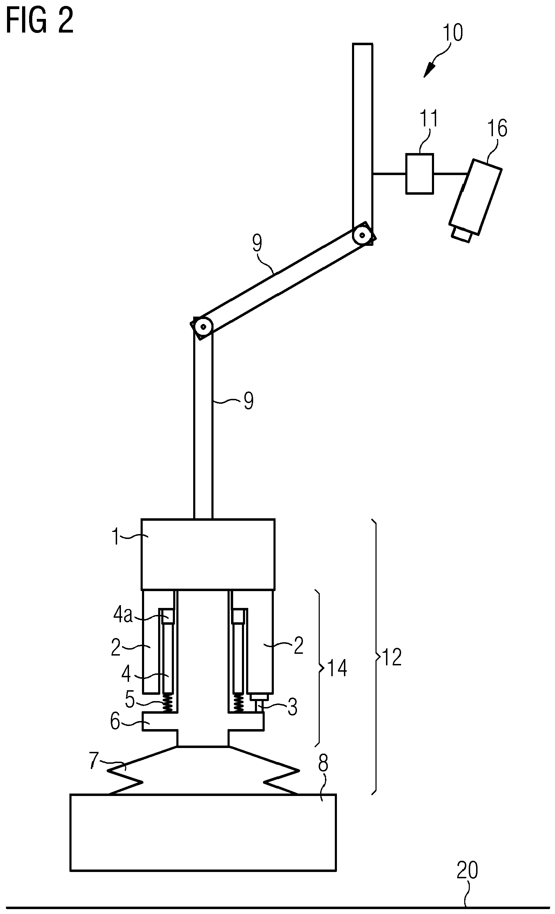

Figur 2 zeigt die Sauggreifvorrichtung 10 mit einem in dem Saugkopf 12 aufgebauten Unterdruck. Das Stückgut 8 wurde vom Boden oder einer sonstigen Auflagefläche 20 aufgehoben. Der Saugnapf 7 hat sich kontrahiert. Zudem wurde die Kolbenstange 6 aufgrund der oben beschriebenen Kolbenkraft und mit der Kolbenstange 6 der Näherungsschalter 3 nach oben verschoben. Dadurch wurde durch den Näherungsschalter 3 ein erstes Ausgangssignal mit einer ansteigenden Flanke erzeugt. Die ansteigende Flanke repräsentiert eine Greifinformation, die aussagt, dass das Stückgut 8 von dem Saugkopf 12 sicher gehalten wird.

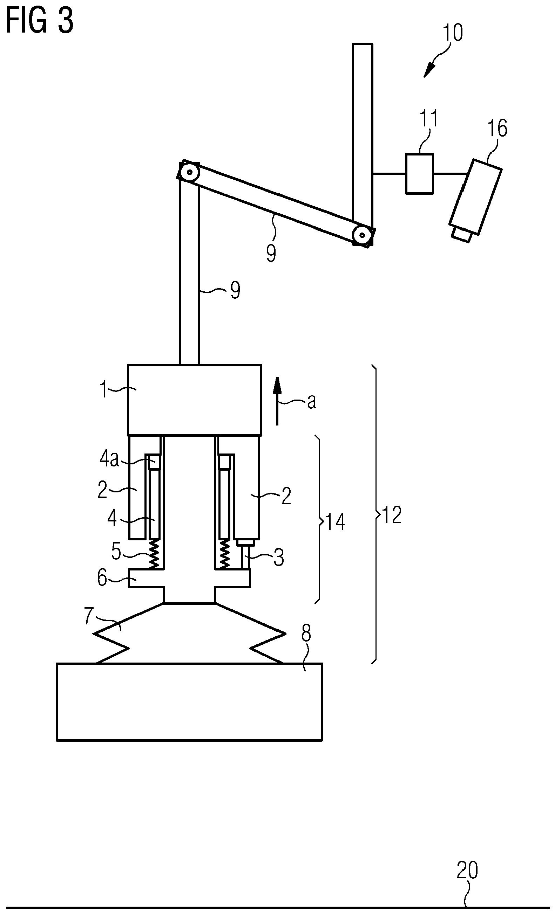

Figur 3 zeigt die Sauggreifvorrichtung 10 zu einem darauffolgenden Zeitpunkt, zu welchem der Saugkopf 12 durch das Bewegungsmittel 9 mit einer Beschleunigung a vertikal nach oben bewegt wird. Durch die Trägheit des Stückguts wirkt eine Trägheitskraft entgegen der Kolbenkraft, wodurch sich der Saugkopf wieder in die Länge zieht und insbesondere die Kolbenstange 6 und mit ihr der Näherungsschalter 3 sich relativ zu dem Gehäuse 2 nach unten bewegen, wodurch der Näherungsschalter 3 ein zweites Ausgangssignal mit einer abfallenden Flanke erzeugt. Die abfallende Flanke repräsentiert eine Greifinformation, die aussagt, dass das Stückgut 8 von dem Saugkopf 12 nicht sicher gehalten wird. Somit ist der Lastsensor 14 ausgestaltet, ein Ausgangssignal zu erzeugen, das eine Information umfasst, wie sicher das Stückgut 8 von dem Saugkopf 12 gehalten wird.

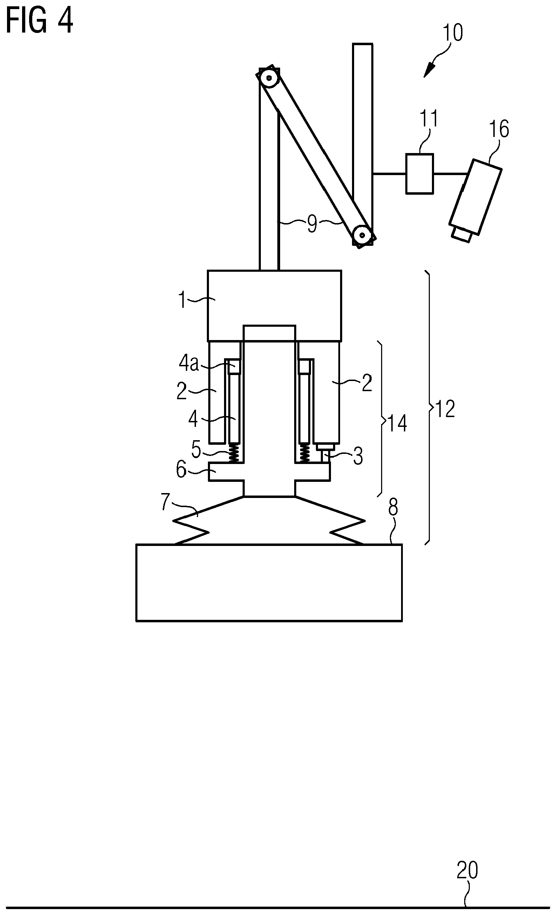

Figur 4 zeigt die Sauggreifvorrichtung 10 zu einem darauffolgenden Zeitpunkt, bei welchem aufgrund des zweiten Ausgangssignals, also aufgrund der Greifinformation, die aussagt, dass das Stückgut 8 von dem Saugkopf 12 nicht sicher gehalten wird, die Beschleunigung des Saugkopfs 12 in vertikaler Richtung reduziert wurde. Dadurch reduziert sich die entgegen der Kolbenkraft wirkende Trägheitskraft, und der Näherungsschalter 3 erzeugt ein drittes Ausgangssignal mit einer ansteigenden Flanke. Die ansteigende Flanke repräsentiert wie bereits bei Figur 2 eine Greifinformation, die aussagt, dass das Stückgut 8 von dem Saugkopf 12 sicher gehalten wird.

Das Kontrollmittel 11 ist somit ausgestaltet, die Sauggreifvorrichtung 10 so anzusteuern, dass mindestens ein Betriebsparameter der Sauggreifvorrichtung 10, nämlich die Beschleunigung des Saugkopfs 12, in Abhängigkeit von der Greifinformation eingestellt wird. Alternativ oder zusätzlich dazu kann das Kontrollmittel 11 beispielsweise ausgestaltet sein, das Saugmittel 1 so anzusteuern, dass die Saugleistung des Saugmittels 1 in Abhängigkeit von der Greifinformation eingestellt wird. Beispielsweise kann die Saugleistung erhöht werden, falls die Greifinformation ein unsicheres Halten des Stückguts anzeigt. Zusätzlich zu dem dadurch ermöglichten sichereren Greifen des Stückguts kann auf diese Weise die effektive Saugleistung an die benötigte Saugleistung angepasst werden, wodurch Energie gespart und die Abnützung der Vakuumpumpe reduziert werden kann.

Durch das mechanische Einbeziehen des Druckniveau am Saugnapf kann gemäss dem anhand der Figuren 1 bis 4 dargestellten Ausführungsbeispiel ein druckabhängiger Lastsensor realisiert werden, der nach dem gleichen physikalischen Prinzip des eigentlichen Vakuumgreifer arbeitet. Dabei besteht die Konstruktion aus dem Kolben 6 mit Vakuumdurchführung. Der Kolben 6 läuft in einer Führung 4, welche zwischen Gehäuse 2 und Kolben 6 abdichtet und eine Relativbewegung zulässt. Abgedichtet wird zwischen dem atmosphärischen Druck von außen und dem Druck im Vakuumsauger 1. Ändert sich beim Greifen der Unterdruck im Saugkopf, so wirkt sich die Änderung der Haltekraft proportional auf die Änderung der Auslösekraft des Lastschalters 3 aus. Optional kann durch die Feder 5 eine definierte Auslösecharakteristik eingestellt werden. Die Position der Kolbens 6 wird somit durch einen einfacher Näherungsschalter 3 detektiert. Dabei reicht ein Verfahrweg von 2mm aus, dass bei Überlast der Sensor ein binäres Signal ausgibt. Optional kann für mehr Informationen ein längerer Verfahrweg für eine beispielsweise analoge Wegmessung verwendet werden.

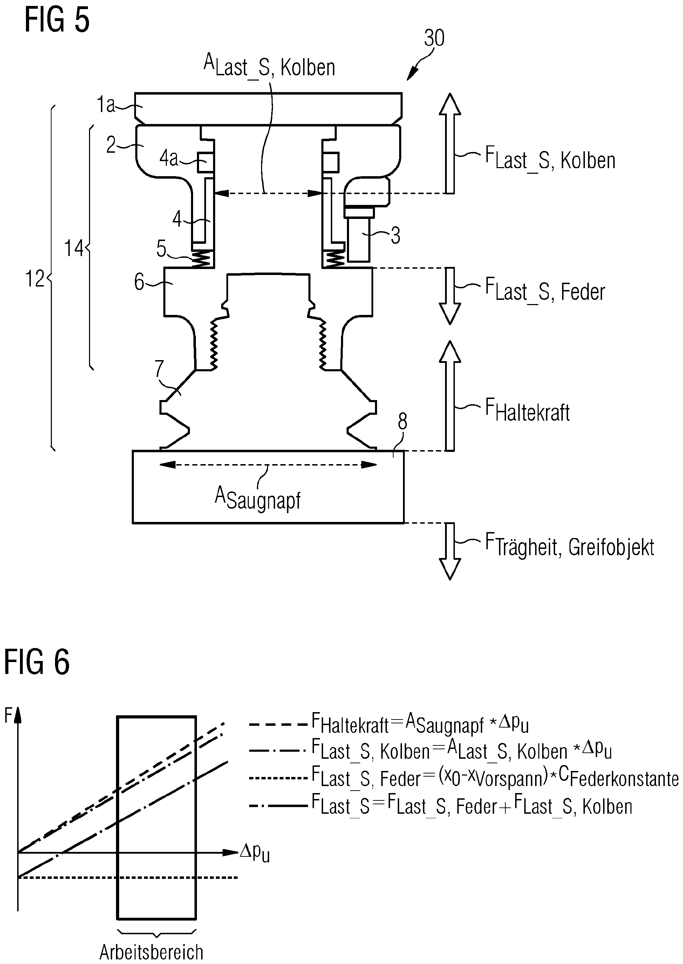

Figur 5 zeigt eine schematische Seitenansicht einer Sauggreifvorrichtung 30 vergleichbar mit derjenigen von Figur 1-4 zur Erläuterung der dabei wirkenden physikalischen Kräfte. Die Sauggreifvorrichtung umfasst eine Ventilanbindung 1a, ein Gehäuse 2, einen Näherungsschalter 3, eine Gleitbuchse 4 mit Dichtungsring 4a, ein Federsystem 5, eine Kolbenstange 6 mit Vakuumdurchführung, einen Saugnapf 7, und ein als Stückgut 8 oder sonstiges zu ergreifendes Objekt mit Masse m. Die pneumatisch wirksame Fläche $A_{Saugnapf}$ des Saugnapfs und die pneumatisch wirksame Fläche $A_{Last\_S,Kolben}$ des Kolbens sind ebenfalls eingezeichnet. Folgende physikalische Grundlagen liegen dem druckunabhängigen Lastschalter vor:

Die Druckabhängigkeit für den Lastschalter wird durch den Kolbenquerschnitt des Lastschalter erreicht:

$$F_{Last\_S,Kolben} = A_{Last\_S,Kolben} * \Delta p_u$$

Optional kann durch die Feder eine definierte Vorspannkraft eingestellt werden:

$$F_{Last\_S,Feder} = (x_0 - x_{Vorspann}) * C_{Federkonstante}$$

In Kombination zwischen Feder und Kolben und entsteht folgende Gleichung für den Lastschalter:

$$F_{Last\_S} = F_{Last\_S,Kolben} + F_{Last\_S,Feder} = A_{Last\_S,Kolben} * \Delta p_u - (x_0 - x_{Vorspann}) * C_{Federkonstante}$$

Wobei die in der Gleichung verwendeten Symbole die folgende Bedeutung haben:

$F_{Last\_S,Kolben}$ die pneumatische Kolbenkraft;
$A_{Last\_S,Kolben}$ zur Atmosphäre abgedichtete Querschnittsfläche des Kolbens;
$\Delta p_u$ die Druckdifferenz des im Saugkopf herrschenden Unterdrucks zum atmosphrischen Druck;
$F_{Last\_S, Feder}$ die Vorspannkraft der Feder;
$x_0$ die Ausgangslänge der Feder in unbelastetem Zustand;
$x_{Vorspann}$ die Länge der vorgespannten Feder in belastetem Zustand;
$C_{Federkonstante}$ die Federkonstante;
$F_{Last\_s}$ Auslöseschwelle des Lastschalters.

Figur 6 zeigt die Abhängigkeit der Haltekraft und des Lastschalter in Abhängigkeit des Druckes.

Gemäss einem Ausführungsbeispiel wird der Unterdruck am Vakuumgreifer verwendet, um ein druckabhängige Kraftwaage zu realisieren, für die druckabhängige Charakterisierung der Last bzw. Masse des Stückguts. Daraus können sich die folgenden Vorteile ergeben:

- Einfache, kostengünstige und kompakte Konstruktion zur Charakterisierung der auf Druck normierten Masseneigenschaften zur erheblichen Optimierung der Dynamik und Durchsatz
- Verhinderung des Abfallens des Stückguts während dem Bewegen des Stückgutes mit einem Vakuumgreifer;
- Einfaches Einstellen bzw. Auslegen der Auslösecharakteristik des Lastschalter durch Veränderung des Querschnittes und der Federvorspannkraft;
- Bestimmung eines erfolgreichen Greifvorgangs / Detektion beim Abfallen einer Sendung;
- Zusatzfunktion: Ruckdämpfer durch Bewegung des Kolbens bei Überlast in Wirkrichtung.

Gemäss einer weiteren Variante ist der Lastsensor nicht wie in Figuren 1-6 dargestellt nicht als Gravitation und Trägheitskräfte berücksichtigender Sensor, sondern als reiner Drucksensor ausgestaltet, der in einem als einfacher Saugnapf ausgestalteten Saugkopf angeordnet ist, und ausgestaltet ist, ein Signal, welches den aktuellen Druck oder Unterdruck in dem Saugkopf repräsentiert, an das Kontrollmittel 11 zu senden. Der aktuelle Druck oder Unterdruck lässt ebenfalls eine Aussage darüber zu, wie sicher ein Stückgut gehalten wird. Ein zu geringer Unterdruck, also ein zu hoher Druck in dem Saugnapf, kann auf eine Leckage zwischen Saugnapf und Stückgut hinweisen, insbesondere dann, wenn der Saugnapf nicht oder mit einer definierten Beschleunigung bewegt wird.

Gemäss einem weiteren Ausführungsbeispiel umfasst der Saugkopf keinen Kolben 6, sondern lediglich einen Lastschalter, der an den Saugnapf der Sauggreifvorrichtung gekoppelt ist, und der die durch den Unterdruck bedingte Verformung des Saugnapfs detektiert. Daraus kann eine Greifinformation abgeleitet werden, die eine Aussage darüber zulässt, wie gut das ergriffene Stückgut von der Sauggreifvorrichtung gehalten wird. Dieser Lastschalter kann optional eine Feder umfassen, damit sich der Lastschalter möglichst reproduzierbar mit dem Saugnapf mitbewegt. Dies hat zwar den Nachteil, dass die Lösung schwieriger mit hoher Präzision umsetzbar ist.

Demgegenüber haben Ausführungsbeispiele in der Art der in den Figuren 1 bis 5 dargestellten Sauggreifvorrichtung den Vorteil, dass mittels der Federkennline und dem Verhältnis von zur Atmosphäre abgedichteter Querschnittsfläche des Kolbens zur Abdichtfläche des Saugnapfes sich die Charakteristik des Sensors konstruktiv sehr präzise einstellen lässt.

Gemäss einem Ausführungsbeispiel lassen sich in Kombination mit einem Vision-System die Sensorinformationen von Vision-System und Lastschalter kombinieren. Beispielsweise kann folgende Greifstrategie verwendet werden:

1. Charakterisierung von Vision-System zwischen Tüte/Karton und Größe;
2. Greifen der Sendung bis der Lastschalter Signal gibt;
3. Die zuvor charakterisierte Sendung mit passender Beschleunigungskennlinie nach Oben fahren (z.B. +Z 200mm) um die Sendungen aus dem Pulk zu lösen;
4. Wenn der Lastsensor auslöst wird eine Verrechnung von momentaner Beschleunigung unter Berücksichtigung der Auslöseverzögerung und anderer Parameter vorgenommen, um eine endgültige Dynamik des weiteren Bewegungsablaufs zu bestimmen (Alternativ: Einfache Unterscheidung zwischen leichter und schwere (kritischer) Sendung);
5. Restlicher Bewegungsablauf nach berechneter Dynamik ausführen + Überwachung durch Lastschalter.

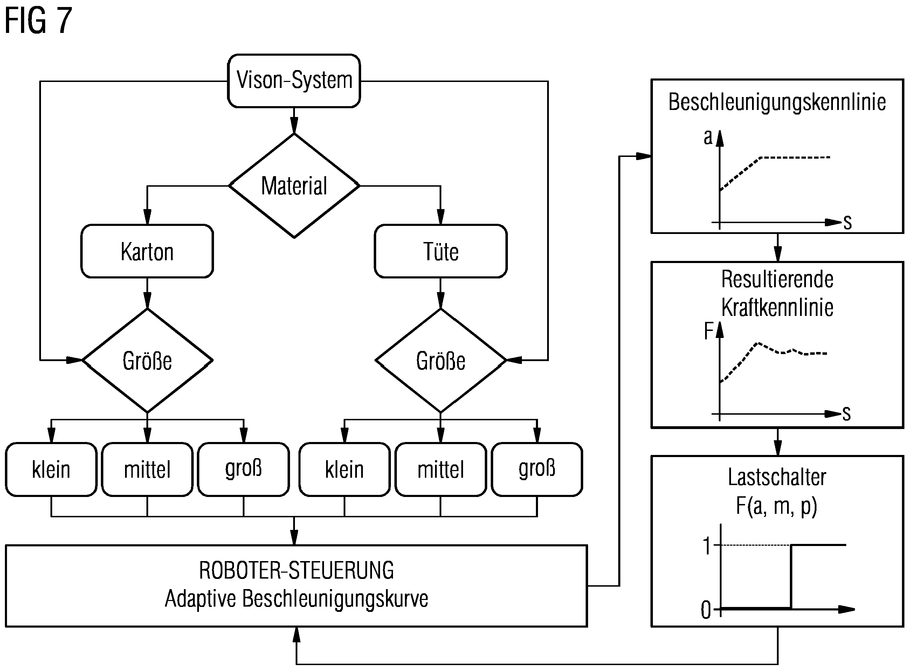

Figur 7 zeigt ein weiteres Ausführungsbeispiel eines Verfahrens und einer Sauggreifvorrichtung die eingerichtet ist, die Schritte gemäss dem Verfahren durchzuführen. Dabei ermittelt ein Vision-System die Art des zu greifenden Stückguts, insbesondere ob es sich um eine Kartonbox oder um eine Tüte handelt. Eine Kartonbox wird in der Regel besser durch die Sauggreifvorrichtung gehalten, während eine Tüte zu verstärkten Leckagen zwischen Saugnapf und Stückgut führt. Ebenso kann die Grösse des Stückguts ermittelt werden, und ein Betriebsparameter des als Roboter ausgestalteten Sauggreifers entsprechend angepasst werden, indem die Robotersteuerung eine adaptive Beschleunigungskurve auswählt, ermittelt und/oder bestimmt, gemäss welcher der Saugkopf bewegt werden soll. Meldet der Lastschalter dass das Stückgut von dem Saugnapf abzureissen droht, werden Betriebsparameter, beispielsweise die Beschleunigungskurve oder die Saugleistung angepasst.

Figur 8 zeigt ein Ausführungsbeispiel einer Sauggreifvorrichtung 30 die in vielen Aspekten vergleichbar der Sauggreifvorrichtung 10 von Figur 1 aufgebaut ist, der jedoch die Kolbenstange 6 nicht mit einem Dichtring 4a von der Atmosphäre abgedichtet ist, sondern mittels eines um die longitudinale Achse 40 Faltenbalges 4b, der zwischen dem Gehäuse 2 und der Kolbenstange 6 angeordnet ist.

Auch umfasst der Saugkopf 14 der Sauggreifvorrichtung 30 lediglich eine Ventilanbindung 1a und nicht eine gesamte Vakuumpumpe. Die Vakuumpumpe kann in diesem Fall abgesetzt vom Saugkopf, beispielsweise stationär angeordnet sein, und über eine pneumatische Leitung den von der Vakuumpumpe generierten Unterdruck in den Saugkopf leiten.

Gemäss einem weiteren Ausführungsbeispiel wird ein Verfahren zum automatisierten Bewegen eines Stückguts mittels eines Sauggreifers vorgestellt. Dabei wird ein Saugkopf des Sauggreifers an das Stückgut angedockt und das Stückgut wird mittels eines in dem Saugkopf erzeugten Unterdrucks ergriffen. Das ergriffene Stückgut wird dann automatisch bewegt, indem der Saugkopf automatisch bewegt wird. Ein Lastsensor erzeugt ein Ausgangssignal, das eine Information umfasst, ob ein Abfallen des Stückguts von dem Saugkopf droht. Das automatische Bewegen des Saugkopf wird kontrolliert vorgenommen, indem eine Beschleunigung des Saugkopfes abhängig von der Information, ob ein Abfallen des Stückguts von dem Saugkopf droht, limitiert wird.

Gemäss einem Ausführungsbeispiel ist die Information, ob ein Abfallen des Stückguts von dem Saugkopf droht, abhängig vom Vorhandensein und/oder von dem Ausmass einer Leckage zwischen dem Stückgut und dem an das Stückgut angedockten Saugnapf ist.

Gemäss einem Ausführungsbeispiel ist der Lastsensor in dem Saugkopf angeordnet. Dies ermöglicht eine kompakte Bauweise des Sauggreifers.

Gemäss einem Ausführungsbeispiel ist der Lastsensor als Lastschalter ausgestaltet, der einen Schwellwert definiert, wobei beim Überschreiten oder Unterschreiten des Schwellwertes die Beschleunigung des Saugkopfes limitiert wird. Dies ermöglicht eine besonders einfache, aber trotzdem wirksame Bau- und Funktionsweise des Sauggreifers. Beispielsweise kann der Schwellwert als Sollwert für den Unterdruck eingestellt werden, bei dessen Unterschreiten (also einem Unterschreiten der Druckdifferenz zwischen atmosphärischem Umgebungsdruck und Druck in dem Saugkopf) die Beschleunigung des Saugkopfes und somit des durch den Saugkopf ergriffenen Stückgutes limitiert wird, um einen Abriss des Stückgutes von dem Saugkopf rechtzeitig zu verhindern.

Gemäss einem Ausführungsbeispiel wird ein Verfahren zum automatisierten Bewegen eines Stückguts mittels eines Sauggreifers vorgestellt. Dabei wird ein Saugkopf des Sauggreifers an das Stückgut angedockt und das Stückgut wird mittels eines in dem Saugkopf erzeugten Unterdrucks ergriffen. Das ergriffene Stückgut wird dann automatisch bewegt in dem der Saugkopf automatisch bewegt wird. Ein Lastsensor erzeugt ein Ausgangssignal, das von einer durch die Bewegung des Stückguts erwirkten Trägheitskraft abhängig ist. Das automatische Bewegen des Saugkopfes wird kontrolliert vorgenommen, indem eine Beschleunigung des Saugkopfes abhängig von dem Ausgangssignal und der durch die Bewegung erwirkten Trägheitskraft limitiert wird.

Auf diese Weise können Stückgüter mit erhöhtem Durchsatz automatisiert mittels eines Sauggreifers bewegt werden, indem für ein durch den Sauggreifer ergriffenes Stückgut eine Beschleunigung limitiert wird, bevor es von dem Saugkopf des Sauggreifers abreisst.

Gemäss einem Ausführungsbeispiel wird ein Verfahren zum automatisierten Bewegen eines Stückguts mittels eines Sauggreifers vorgestellt. Dabei wird ein Saugkopf des Sauggreifers an das Stückgut angedockt und das Stückgut wird mittels eines in dem Saugkopf erzeugten Unterdrucks ergriffen. Das ergriffene Stückgut wird dann automatisch bewegt in dem der Saugkopf automatisch bewegt wird. Ein Lastsensor erzeugt ein Ausgangssignal, das von dem in dem Sauggreifer herrschenden Unterdruck abhängig ist. Das automatische Bewegen des Saugkopfes wird kontrolliert vorgenommen, indem eine Beschleunigung des Saugkopfes abhängig von dem Ausgangssignal und dem in dem Sauggreifer herrschenden Unterdruck limitiert wird.

**Patentansprüche**

1. Verfahren zum automatisierten Bewegen eines Stückguts (8) mittels einer Sauggreifvorrichtung (10), umfassend die Verfahrensschritte:

   - Andocken eines Saugkopfs (12) der Sauggreifvorrichtung (10) an das Stückgut (8) und Greifen des Stückguts (8) mittels eines in dem Saugkopf (12) erzeugten Unterdrucks;
   - Automatisches Bewegen des durch die Sauggreifvorrichtung (10) ergriffenen Stückgutes (8) durch automatisches Bewegen des Saugkopfes (12);
   - Erzeugen eines Ausgangssignals mittels eines Lastsensors (14), wobei das Ausgangssignal eine Information umfasst, die im Folgenden Greifinformation genannt wird, und die eine Aussage darüber zulässt, wie sicher das Stückgut (8) durch die Sauggreifvorrichtung (10) gehalten wird;
   - Einstellen mindestens eines Betriebsparameters der Sauggreifvorrichtung (10) in Abhängigkeit von der Greifinformation.

2. Verfahren nach Anspruch 1, wobei der mindestens eine Betriebsparameter eine Beschleunigung des Saugkopfs (12) umfasst.

3. Verfahren nach einem der vorhergehenden Ansprüche, wobei der mindestens eine Betriebsparameter eine Pumpleistung einer Vakuumpumpvorrichtung (1) umfasst, welche den Unterdruck generiert.

4. Verfahren nach einem der vorhergehenden Ansprüche, wobei die Greifinformation abhängig von einer durch die Bewegung des Stückguts (8) erwirkten Trägheitskraft und/oder abhängig von der Masse des Stückguts (8) ist.

5. Verfahren nach einem der vorhergehenden Ansprüche, wobei die Greifinformation abhängig von dem in der Sauggreifvorrichtung (10) herrschenden Unterdruck ist.

6. Verfahren nach einem der vorhergehenden Ansprüche, wobei eine Art des Stückguts (8) ermittelt wird, beispielsweise ob es sich bei dem Stückgut (8) um ein Paket oder um eine Tüte handelt, und der mindestens eine Betriebsparameter abhängig von der ermittelten Art des Stückgutes (8) eingestellt wird.

7. Sauggreifvorrichtung (10) umfassend einen Saugkopf (12), ein Saugmittel (1), einen Lastsensor (14), ein Bewegungsmittel (9) und ein Kontrollmittel (11);
   wobei das Saugmittel (1) ausgestaltet ist, einen Unterdruck in dem Saugkopf (12) zu erzeugen;
   wobei der Saugkopf (12) ausgestaltet ist, an ein Stückgut (8) angedockt zu werden und dieses mittels eines in dem Saugkopf (12) erzeugten Unterdrucks zu greifen;
   wobei das Bewegungsmittel (9) ausgestaltet ist, den Saugkopf (12) und das durch den Saugkopf (12) ergriffene Stückgut (8) automatisch zu bewegen;
   wobei der Lastsensor (14) ausgestaltet ist, ein Ausgangssignal zu erzeugen, das eine Information umfasst, die im Folgenden Greifinformation genannt wird und die eine Aussage darüber zulässt, wie sicher das Stückgut (8) von dem Saugkopf (12) gehalten wird;
wobei der Lastsensor (14) ausgestaltet ist, dieses Ausgangssignal in das Kontrollmittel (11) einzuspeisen; und
wobei das Kontrollmittel (11) ausgestaltet ist, die Sauggreifvorrichtung (10) so anzusteuern, dass mindestens ein Betriebsparameter der Sauggreifvorrichtung (10) in Abhängigkeit von der Greifinformation eingestellt wird.

8. Sauggreifvorrichtung (10) nach Anspruch 7, wobei der mindestens eine Betriebsparameter eine Beschleunigung des Saugkopfs (12) umfasst und das Kontrollmittel (11) ausgestaltet ist, das Bewegungsmittel (9) so anzusteuern, dass die Beschleunigung des Saugkopfs (12) in Abhängigkeit von der Greifinformation eingestellt wird.

9. Sauggreifvorrichtung (10) nach einem der Ansprüche 7 oder 8, wobei der mindestens eine Betriebsparameter eine Saugleistung des Saugmittels (1) umfasst, welches den Unterdruck generiert; und
wobei das Kontrollmittel (11) ausgestaltet ist, das Saugmittel (1) so anzusteuern, dass die Saugleistung des Saugmittels (1) in Abhängigkeit von der Greifinformation eingestellt wird.

10. Sauggreifvorrichtung (10) nach einem der Ansprüche 7 bis 9, wobei die Greifinformation abhängig von einer durch die Bewegung des Stückguts (8) erwirkten Trägheitskraft und/oder abhängig von der Masse des Stückguts (8) ist.

11. Sauggreifvorrichtung (10) nach einem der Ansprüche 7 bis 10, wobei die Greifinformation abhängig von dem in dem Saugkopf (12) herrschenden Unterdruck ist.

12. Sauggreifvorrichtung (10) nach einem der Ansprüche 7 bis 11, umfassend ein Visionsystem (16), das ausgestaltet ist, eine Eigenschaft des Stückguts (8) zu ermitteln, und eine Information, die diese Eigenschaft charakterisiert und die im Folgenden Stückguteigenschaftsinformation genannt wird, in das Kontrollmittel (11) einzuspeisen; und wobei das Kontrollmittel (11) ausgestaltet ist, die Sauggreifvorrichtung (10) so anzusteuern, dass der mindestens eine Betriebsparameter der Sauggreifvorrichtung (10) in Abhängigkeit von der Stückguteigenschaftsinformation eingestellt wird.

13. Sauggreifvorrichtung (10) nach einem der Ansprüche 7 bis 12, wobei der Lastsensor (14) als Lastschalter ausgestaltet ist, der einen Schwellwert umfasst, wobei beim Überschreiten oder Unterschreiten des Schwellwertes der mindestens eine Betriebsparameter eingestellt wird.

14. Sauggreifvorrichtung (10) nach einem der Ansprüche 7 bis 13, wobei der Lastsensor (14) ausgestaltet ist, ein Ausgangssignal auszugeben, das mehr als eine reine Schwellwertentscheidung zulässt, und der mindestens eine Betriebsparameter abhängig von einem analogen oder quasianalogen Wert des Ausgangssignals eingestellt wird.

# FIG 1

FIG 2

10

11

16

9

9

1

4a

2

2

4

5

3

6

14

12

7

8

20

FIG 3

EP 4 035 845 A1

FIG 4

13

## FIG 5

$A_{Last\_S, Kolben}$

30

1a

2

4a

4

5

6

7

8

$A_{Saugnapf}$

14

12

3

$F_{Last\_S, Kolben}$

$F_{Last\_S, Feder}$

$F_{Haltekraft}$

$F_{Trägheit, Greifobjekt}$

## FIG 6

F

$\Delta p_u$

$- - - F_{Haltekraft} = A_{Saugnapf} * \Delta p_u$

$- \cdot - F_{Last\_S, Kolben} = A_{Last\_S, Kolben} * \Delta p_u$

$\cdots\cdots F_{Last\_S, Feder} = (x_0 - x_{Vorspann}) * C_{Federkonstante}$

$- \cdot - F_{Last\_S} = F_{Last\_S, Feder} + F_{Last\_S, Kolben}$

Arbeitsbereich

# FIG 7

Vison-System

Material

Karton     Tüte

Größe     Größe

klein   mittel   groß    klein   mittel   groß

ROBOTER-STEUERUNG
Adaptive Beschleunigungskurve

Beschleunigungskennlinie

Resultierende
Kraftkennlinie

Lastschalter
F(a, m, p)

EP 4 035 845 A1

## FIG 8

Europäisches
Patentamt

European
Patent Office

Office européen
des brevets

**EUROPÄISCHER RECHERCHENBERICHT**

Nummer der Anmeldung

EP 21 15 4060

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 045681 A1 (ECKELT GLAS GMBH [AT]) 5. April 2007 (2007-04-05) * Seiten 1-3; Abbildungen 1-3 * | 1,7 | INV. B25J9/16 B65G47/91 |
| X | US 9 205 558 B1 (ZEVENBERGEN JOHN [US] ET AL) 8. Dezember 2015 (2015-12-08) * Seiten 1-11; Abbildungen 1-4 * | 1,2,7,8 | |
| X | DE 10 2014 218295 A1 (SCHMALZ J GMBH [DE]) 9. April 2015 (2015-04-09) * Seiten 1-4; Abbildungen 1-3 * | 1,3,7,9, 13,14 | |
| X | DE 10 2015 205494 A1 (KUKA SYSTEMS GMBH [DE]) 29. September 2016 (2016-09-29) * Seiten 1-6; Abbildungen 1-4 * | 1,5,7,11 | |
| X | US 10 583 560 B1 (RODRIGUES JOSE JERONIMO MOREIRA [JP] ET AL) 10. März 2020 (2020-03-10) * Seiten 1-14; Abbildungen 1-6 * | 1,4,6,7, 10,12 | |
| X | WO 2020/056437 A1 (TRUMPF MASCHINEN AUSTRIA GMBH & CO KG [AT]) 26. März 2020 (2020-03-26) * Seiten 1-20; Abbildungen 1-5 * | 1,7 | RECHERCHIERTE SACHGEBIETE (IPC) B25J |
| A | GB 2 575 723 A (OCADO INNOVATION LTD [GB]) 22. Januar 2020 (2020-01-22) * Seiten 1-20; Abbildungen 1-13 * | 1,7 | |

Der vorliegende Recherchenbericht wurde für alle Patentansprüche erstellt

| Recherchenort | Abschlußdatum der Recherche | Prüfer |
|---|---|---|
| Den Haag | 29. Juni 2021 | Martin, Benoit |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 15 4060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2021

| Im Recherchenbericht angeführtes Patentdokument | Datum der Veröffentlichung | Mitglied(er) der Patentfamilie | Datum der Veröffentlichung |
|---|---|---|---|
| DE 102005045681 A1 | 05-04-2007 | DE 102005045681 A1<br>EP 1934127 A1<br>US 2008247856 A1<br>WO 2007051508 A1 | 05-04-2007<br>25-06-2008<br>09-10-2008<br>10-05-2007 |
| US 9205558 B1 | 08-12-2015 | AU 2015289915 A1<br>CN 106660212 A<br>EP 3169490 A1<br>JP 6374993 B2<br>JP 2017520417 A<br>KR 20170013925 A<br>US 9205558 B1<br>WO 2016010968 A1 | 12-01-2017<br>10-05-2017<br>24-05-2017<br>15-08-2018<br>27-07-2017<br>07-02-2017<br>08-12-2015<br>21-01-2016 |
| DE 102014218295 A1 | 09-04-2015 | KEINE | |
| DE 102015205494 A1 | 29-09-2016 | KEINE | |
| US 10583560 B1 | 10-03-2020 | CN 110370279 A<br>DE 102020104468 A1<br>JP 6617237 B1<br>JP 6621164 B1<br>JP 2020168709 A<br>JP 2020168710 A<br>JP 2020168711 A<br>US 10583560 B1<br>US 2020316774 A1 | 25-10-2019<br>08-10-2020<br>11-12-2019<br>18-12-2019<br>15-10-2020<br>15-10-2020<br>15-10-2020<br>10-03-2020<br>08-10-2020 |
| WO 2020056437 A1 | 26-03-2020 | AT 521384 A4<br>AT 521771 A4<br>CN 112739632 A<br>CN 112770992 A<br>EP 3853158 A1<br>EP 3853159 A2<br>WO 2020056437 A1 | 15-01-2020<br>15-05-2020<br>30-04-2021<br>07-05-2021<br>28-07-2021<br>28-07-2021<br>26-03-2020 |
| GB 2575723 A | 22-01-2020 | AU 2019276201 A1<br>CA 3095706 A1<br>CN 112292237 A<br>EP 3802014 A1<br>GB 2575723 A<br>KR 20200144143 A<br>WO 2019229181 A1 | 03-12-2020<br>05-12-2019<br>29-01-2021<br>14-04-2021<br>22-01-2020<br>28-12-2020<br>05-12-2019 |

EPO FORM P0461

Für nähere Einzelheiten zu diesem Anhang : siehe Amtsblatt des Europäischen Patentamts, Nr.12/82